# EUROPEAN PATENT APPLICATION

(11) **EP 4 648 001 A1**
(43) Date of publication of application: **12.11.2025**
(21) Application number: 23869321.2
(22) Date of filing: 19.05.2023
(51) Int. Cl.: G06Q 50/10, G06F 21/64, H04L 9/32

(54) **INFORMATION PROCESSING DEVICE, METHOD, AND PROGRAM**

(30) Priority: 05.01.2023 JP 2023000557
(71) Applicant: LE-TECHS INC., Tokyo 102-0083 (JP)
(72) Inventor: OGURA, Takashi, Tokyo 1530065 (JP)
(74) Representative: Hoffmann Eitle
(86) International application number: PCT/JP2023/018692
(87) International publication number: WO 2024/147208

(57) **Abstract**

An information processing apparatus according to an embodiment of the present invention includes a first management file identifier acquiring unit that acquires, on the basis of an electronic signature of a user affixed to an electronic document, a first management file identifier for identifying a first management file including a hash value of the electronic document, a first management file acquiring unit that acquires the first management file on the basis of the acquired first management file identifier, a second management file acquiring unit that acquires, on the basis of the hash value included in the first management file, a second management file including the hash value and a URL for specifying a storage area in which the electronic document is stored, and a URL output unit that outputs the URL.

## Description

### Technical Field

**The** present disclosure relates to an information processing apparatus, method, and program.

### Background Art

Attempts have been made to replace paper contracts with digital data contracts. It has been known that electronic signature can be used for digital data for the purpose of proving that the data has not been altered. For example, an electronic signature system has been proposed that executes electronic signature to data to be signed (see for example Patent Document 1).

### Citation List

### Patent Document

Patent Document 1: Patent Publication JP-A-2018-067807

### Summary

### Technical Problem

In the electronic signature system disclosed in Patent Document 1, the hash value of digital data included an electronic signature is compared with the hash value of the digital data at the time of browsing. As a result of the comparison, if the hash values are different, it is determined that the digital data has been altered. In this way, digital data alteration can be detected.

Meanwhile, in the electronic signature system disclosed in Patent Document 1, since a private key is used for an electronic signature, the private key has to be managed, and a corresponding public key has to be acquired. In addition, since electronic signatures are usually invisible, whether an electronic signature is used cannot be intuitively determined. Even if an electronic signature can be verified as authentic, the content of the electronic document cannot be verified.

With the foregoing state of art in view, it is an object of the present invention to provide an information processing apparatus, method, and program that allow the content of an electronic document to be verified in an environment where the authenticity of the electronic document is ensured.

### Solution to Problem

An information processing apparatus according to an embodiment of the present invention includes a first management file identifier acquiring unit that acquires, on the basis of an electronic signature of a user affixed to an electronic document, a first management file identifier for identifying a first management file including a hash value of the electronic document, a first management file acquiring unit that acquires the first management file on the basis of the acquired first management file identifier, a second management file acquiring unit that acquires, on the basis of the hash value included in the first management file, a second management file including the hash value and a URL for specifying a storage area in which the electronic document is stored, and a URL output unit that outputs the URL.

### Advantageous Effects of Invention

According to the invention, the content of an electronic document can be checked in an environment where the authenticity of the electronic document is ensured.

### Brief Description of Drawings

Fig. 1 is a schematic diagram of an overview of an electronic signature system using a signature generator according to an embodiment of the invention.
Fig. 2 is a schematic view of an electronic document with electronic signatures generated by the signature generator according to the embodiment.
Fig. 3 is a block diagram of a configuration of the signature generator 1 according to the embodiment.
Fig. 4 is a block diagram of a configuration of a browsing device 100 according to the embodiment.
Fig. 5 is a schematic diagram of an exemplary data structure of a management file according to the embodiment.
Fig. 6 is an operation flowchart for use in illustrating exemplary processing performed by the browsing device 100 according to the embodiment.
Fig. 7 is a schematic view of an example of a first screen G1 according to the embodiment.
Fig. 8 is a schematic view of an example of a second screen G2 according to the embodiment.
Fig. 9 is a schematic view of an example of a third screen G3 according to the embodiment.

### Description of Embodiments

With reference to the accompanying drawings, preferred embodiments of the invention will be described. (Note that elements with the same reference characters have the same or similar configurations among the drawings.)

### <Overview>

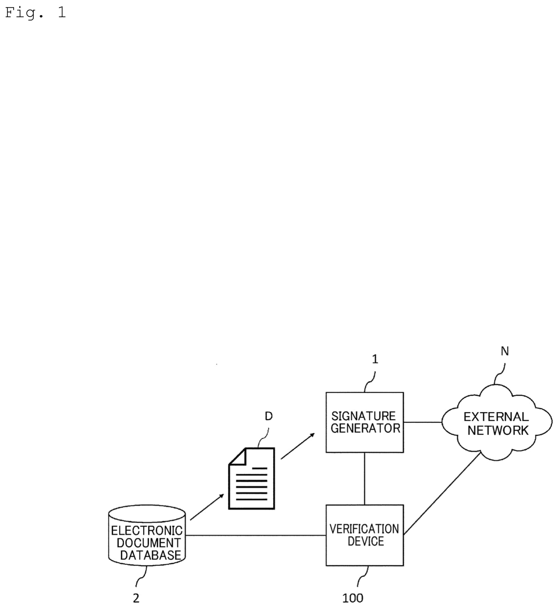

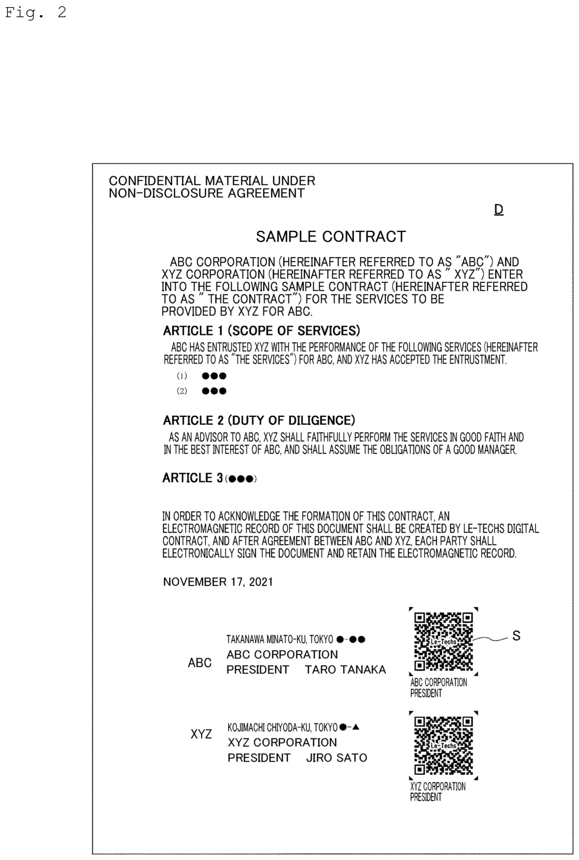

Fig. 1 is a schematic diagram of an overview of an electronic signature system using a signature generator according to an embodiment of the invention. Fig. 2 is a schematic view of an electronic document with electronic signatures generated by the signature generator according to the embodiment.

As shown in Fig. 1, the electronic signature system includes for example a signature generator 1, an electronic document database 2, a browsing device 100, and an external network N.

The signature generator 1 is for example an information processing apparatus such as a server. The signature generator 1 generates an electronic signature S for an electronic document D such as a contract by a user (such as a corporation). The electronic document D is stored for example in the electronic document database 2. In other words, the signature generator 1 generates the electronic signature S of the user to be affixed to the electronic document D. The signature generator 1 may generate the electronic document D that indicates an agreement to the electronic document D by providing the electronic signature S to the electronic document D in a visible manner. According to the following embodiment, the signature generator 1 generates the electronic signature S without using a private key, so that the leakage of the private key can be reduced, which allows the electronic document D to be easily authenticated.

In the following description of the embodiment, the term "electronic document" refers to an electronically created text for example as a contract, an estimate, an application, a purchase order, a delivery note, a bill, a receipt, an invoice, minutes, a request for approval, and an application form. In addition, the term "electronic signature" refers to the act of electronically affixing a seal to an electronic document D, rather than to a paper contract.

The signature generator 1 is connected to an external network N as shown in Fig. 1. The signature generator 1 creates a management file for the electronic document D with the electronic signature S. The signature generator 1 holds the created management file for the electronic document D on the external network N. The external network N may include a plurality of node computers that store a blockchain. The format of the blockchain may be, but not limited to, as a consortium-type private blockchain. The signature generator 1 holds for example the management file on the external network N that is configured as such a blockchain. As for the electronic document D, by confirming the identity of the stored management file and the electronic signature S written on the electronic document D, it can be verified that the electronic document D has not been altered.

In particular, the signature generator 1 affixes the visible electronic signature S to the electronic document D as shown in Fig. 2. The signature generator 1 affixes an electronic signature S corresponding to each of two users (parties) in a visible manner. The signature generator 1 may affix an electronic signature S indicated as a QR code^{®} (registered trademark) to the electronic document D.

The browsing device 100 may be configured as a discrete device from the signature generator 1. The browsing device 100 is for example an information processing apparatus such as a smartphone, a tablet terminal, and a personal computer each having an imaging function. The browsing device 100 acquires the management file held on the external network N on the basis of the electronic signature S generated by the signature generator 1 and performs authentication processing to verify the authenticity of the electronic document D on the basis of information included in the acquired management file. The browsing device 100 also executes the processing of displaying various kinds of information on the basis of the information included in the acquired management file. In particular, the browsing device 100 indicates a URL for identifying a storage area where the electronic document D is stored in the electronic document database 2. When the user selects the URL, the browsing device 100 acquires the electronic document D from the electronic document database 2 and displays the document. In this way, the user can check the content of the electronic document D in an environment where the authenticity of the electronic document D is ensured. Furthermore, since the content of the electronic document D can be checked from the electronic signature S, the user may keep a paper printout of the electronic document D rather than the file of the electronic document D and can still maintain its evidential value (supported by the information in the control file).

### <Configuration>

### <<Signature Generator 1>>

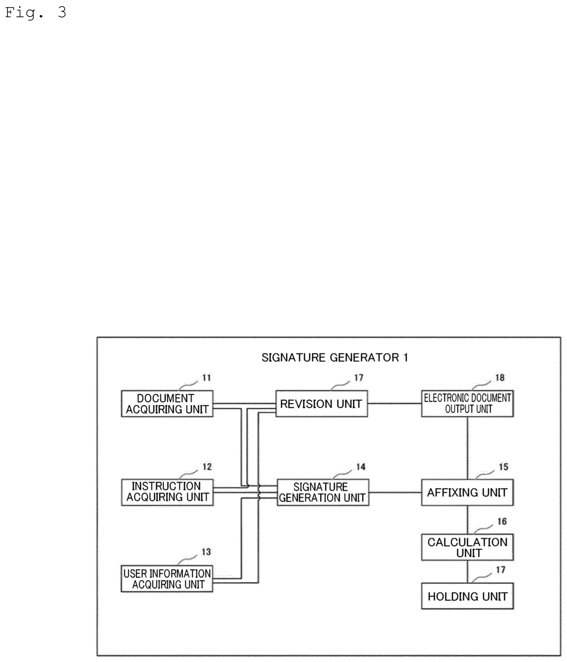

Fig. 3 is a block diagram of a configuration of the signature generator 1 according to the embodiment. The signature generator 1 includes a document acquiring unit 11, an instruction acquiring unit 12, a user information acquiring unit 13, a signature generation unit 14, an affixing unit 15, a calculation unit 16, a holding unit 17, an electronic document output unit 18, and a revision unit 19.

**The** document acquiring unit 11 is implemented for example as a CPU operates. The document acquiring unit 11 acquires the electronic document D. For example, the document acquiring unit 11 acquires electronic data about a contract as the electronic document D. The document acquiring unit 11 acquires for example scanned paper data or data created using a browser or an application as the electronic document D. The document acquiring unit 11 also acquires for example a revised version of the electronic document D.

The instruction acquiring unit 12 is implemented for example as the CPU operates. The instruction acquiring unit 12 acquires an instruction for generating a signature for the acquired electronic document D to be signed. The instruction acquiring unit 12 acquires for example an instruction to generate an electronic signature S from a user who is the subject of the contract. The instruction acquiring unit 12 may also acquire, as identification information, information that identifies the original electronic document D to be revised. The instruction acquiring unit 12 also acquires an instruction for revising the electronic document D.

The user information acquiring unit 13 is implemented for example as the CPU operates. The user information acquiring unit 13 acquires information about a user as user information. According to the embodiment, the user information acquiring unit 13 acquires the user ID of the user issued in advance and the user name. Here, the user information acquiring unit 13 acquires user IDs and user names of subjects (users) as user information. According to the embodiment, the user information acquiring unit 13 also acquires user information from each of the two corporation users when generating the electronic signature S.

The signature generation unit 14 is implemented for example as the CPU operates. The signature generation unit 14 generates an encoded electronic signature S that includes time information indicating the signed time and identification information identifying the user. The signature generation unit 14 generates for example a QR code including time information and user information (user ID). The signature generation unit 14 also generates unique character information on the basis of the acquired generation instruction and generates an electronic signature S that includes the generated character information as signature information. In this way, the signature generation unit 14 generates different character information for each generation of the electronic signature S. For example, the signature generation unit 14 also generates a new electronic signature S for a revised version of the electronic document D. The signature generation unit 14 for example generates a new electronic signature S that includes new unique document information. The unique character information included in the electronic signature S is included in a first management file identifier which will be described.

The affixing unit 15 is implemented for example as the CPU operates. The affixing unit 15 affixes the generated electronic signature S to the electronic document D in a visible manner. For example, as shown in Fig. 2, the affixing unit 15 affixes the generated electronic signature S alongside the corporation name and the representative's name as the user information in the electronic document D. The affixing unit 15 for example places the electronic signature S in such a position in the electronic document D that the electronic signature S can be seen to correspond to the user information described in the document. According to the embodiment, the affixing unit 15 places the name of the user included in the acquired user information and the electronic signature S side by side. For example, as shown in Fig. 2, the affixing unit 15 places the user name at the lower part of the display surface of the electronic document D for the electronic signature S (QR code) of the corresponding user. The affixing unit 15 also affixes a time stamp to the electronic document D after affixing the electronic signature S to all the users. The affixing unit 15 also writes for example a newly generated electronic signature S to the revised electronic document D. The affixing unit 15 also writes for example time information indicating the signed time of the newly generated electronic signature S to the revised electronic document D.

The calculation unit 16 is implemented for example as the CPU operates. The calculation unit 16 calculates the hash value of the electronic document D. For example, the calculation unit 16 calculates the hash value of the electronic document D after electronic signatures S are affixed for all the users. The calculation unit 16 also calculates for example the hash value of the revised electronic document D.

The holding unit 17 is implemented for example as the CPU operates. The holding unit 17 holds the signature information and the time information as a management file that manages the electronic document D. For example, the holding unit 17 holds the user ID, the user name, the signature information, the date and time of signature, and the hash value of the electronic document D as a separate management file from the electronic document D. Specifically, the holding unit 17 stores the user ID and the user name of each signer, the signature information, the date and time of the signature, and the hash value of the electronic document D as a separate management file from the electronic document D. The holding unit 17 holds the management file on the external network N. According to the embodiment, the holding unit 17 holds the management file in a blockchain. For example, the holding unit 17 holds the management file at the location of the address indicated by the identifier. The holding unit 17 also holds at least the calculated hash value in the management file. The holding unit 17 holds for example the user ID, the user name, the new signature information, the time information, and the hash value in the management file that manages the electronic document D. The holding unit 17 holds for example a revised management file in association with the management file before the revision.

The electronic document output unit 18 is implemented for example as the CPU operates. The electronic document output unit 18 outputs the electronic document D including the written signature information and time information. The electronic document output unit 18 outputs the electronic document D including the signature information and the time information for example to a display device such as a display (not shown). The electronic document output unit 18 also stores the electronic document D with the affixed electronic signature S in a prescribed storage device.

The revision unit 19 is implemented for example as the CPU operates. The revision unit 19 revises the content of the electronic document D. The revision unit 19 revises an identified electronic document D on the basis of the revised version of the electronic document D. The revision unit 19 identifies the electronic document D to be revised for example by the user ID, the user name, the electronic signature S, and the date and time of the signature which are held in the management file.

The processing of generating an electronic signature S by the signature generator 1 is performed for example as follows. First, the document acquiring unit 11 acquires an electronic document D from the electronic document database 2. Then, the user information acquiring unit 13 acquires user information. Then, the instruction acquiring unit 12 acquires an instruction for generating an electronic signature S. The signature generation unit 14 then generates the electronic signature S. Then, the affixing unit 15 writes the electronic signature S and the signed time into the electronic document D. Then, the holding unit 17 stores the user ID and the user name of each signer, the signature information, the date and time of the signature, and the hash value of the electronic document D as a separate management file from the electronic document D. This completes the processing of generating the electronic signatures S.

The processing of revising the electronic document D by the signature generator 1 is performed for example as follows. When the document acquiring unit 11 acquires a revised version of the electronic document D, the instruction acquiring unit 12 acquires a revision instruction. Then, the revision unit 19 revises the electronic document D. The affixing unit 15 then writes the electronic signature S and the signed time into the electronic document D. The calculation unit 16 then calculates the hash value of the revised electronic document D. The holding unit 17 then holds the user ID, the user name, the signature information, the signed time, and the hash value about the revised electronic document D in a management file. This completes the processing of revising the electronic document D.

Each of the components included in the signature generator 1 can be implemented by hardware, software, or a combination thereof. Here, to be implemented by software means to be implemented as a computer reads and executes a program. The program can be stored using various types of non-transitory computer-readable media and supplied to the computer. The non-transitory computer-readable media include various types of tangible storage media. Examples of the non-transitory computer-readable medium include a magnetic storage medium (such as a flexible disk, a magnetic tape, and a hard disk drive), a magneto-optical storage medium (such as a magneto-optical disk), a CD-ROM (Read Only Memory), a CD-R, a CD-R/W, and a semiconductor memory (such as a mask ROM, a PROM (Programmable ROM), an EPROM (Erasable PROM), a flash ROM, and a RAM (Random Access Memory)). The display program may also be supplied to the computer by any of various types of transitory computer-readable media. Examples of the transitory computer-readable medium may include an electrical signal, an optical signal, and an electromagnetic wave. The transitory computer-readable media can supply the program to the computer through a wired communication path such as an electric wire and an optical fiber or a wireless communication path.

**As** in the foregoing, the signature generator 1 and the program according to the embodiment exhibit the following advantageous effects. (1) A signature generator 1 for generating an electronic signature S of a user to be affixed to an electronic document D includes a document acquiring unit 11 that acquires the electronic document D, an instruction acquiring unit 12 that acquires an instruction for generating a signature for the acquired electronic document D, an electronic signature generation unit 14 that generates an encoded electronic signature S including time information indicating singed time and identification information that identifies the user, and an affixing unit 15 that affixes the generated electronic signature S to the electronic document D in a visible manner.

(2) A program for causing a computer to operate as a signature generator 1 for generating an electronic signature S of a user to be affixed to an electronic document D causes the computer to function as a document acquiring unit 11 that acquires an electronic document D, an instruction acquiring unit 12 that acquires an instruction for generating a signature for the acquired electronic document D, a signature generation unit 14 that generates an encoded electronic signature S including time information indicating signed time and identification information that identifies the user, and an affixing unit 15 that affixes the generated electronic signature S to the electronic document D in a visible manner.

In this way, the electronic signature S can be affixed to the electronic document D in a visible manner. Therefore, it can be easily identified that the electronic signature S has been affixed to the electronic document D. In addition, the electronic signature S is encoded, so that various kinds of information included in the electronic signature S can be easily extracted. Therefore, the electronic signature S can be easily handled.

(3) The signature generator 1 further includes a calculation unit 16 that calculates the hash value of the electronic document D and a holding unit 17 that holds the time information and the hash value in a management file that manages the electronic document D, and in the management file, the electronic signature S including an identifier that identifies the management file indicating the time information affixed to the electronic document D and the hash value of the electronic document D is generated. In this way, the management file can be identified from the electronic signature S, which makes it easier to search for the management file. This also facilitates comparison between the electronic document D and the management file. In this way, whether the electronic document D has been altered can be easily determined.

(4) The signature generator 1 further includes a user information acquiring unit 13 that acquires information about the user as user information, and the signature generation unit 14 generates an electronic signature S including the acquired user information. This allows the electronic document D to be managed on a user basis.

(5) The affixing unit 15 affixes the user name included in the acquired user information alongside the electronic signature S. As for the encoded electronic signature S, this make it easier to clearly determine which user the electronic signature S belongs to. In addition, since the code can be treated like a seal as the code is placed alongside the encoded electronic signature S, a visual effect similar to that of a seal on paper can be acquired.

(6) The holding unit 17 holds the management file on the external network N. This prevents the management file from being lost as compared to the case where the signature generator 1 holds the file. Therefore, the inability to match the electronic document D with the management file can be reduced.

(7) The signature generator 1 further includes a revision unit 19 that revises the content of the electronic document D. The document acquiring unit 11 acquires the revised content of the electronic document D, the affixing unit 15 writes signature information and time information indicating the signed time after the revision into the revised electronic document D, the calculation unit 16 calculates the hash value of the revised electronic document D, and the holding unit 17 holds at least the calculated hash value in the management file. This ensures the identity of the calculated hash value and the revised electronic document D. Therefore, whether alteration has been made can be determined even after the revision has been made.

### <<Browsing Device 100>>

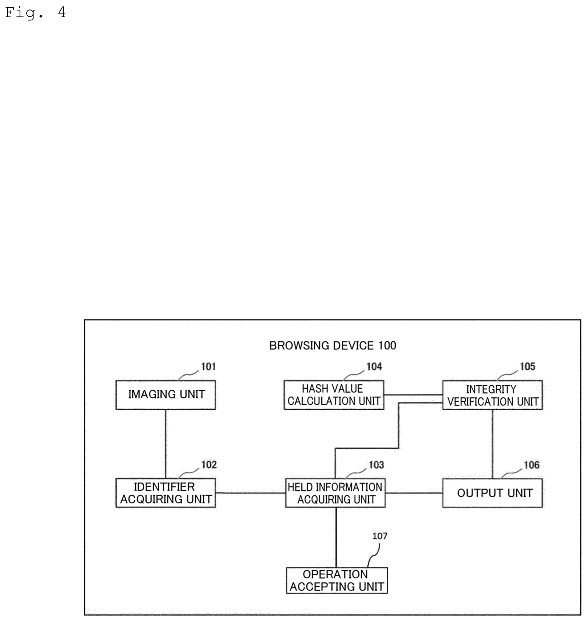

Fig. 4 is a block diagram of a configuration of the browsing device 100 according to the embodiment. The browsing device 100 includes an imaging unit 101, an identifier acquiring unit 102, a held information acquiring unit 103, a hash value calculation unit 104, an integrity verification unit 105, an output unit 106, and an operation accepting unit 107.

The imaging unit 101 is a so-called imaging mechanism including a camera. The imaging unit 101 for example captures an image of an electronic signature S affixed to an electronic document D. The imaging unit 101 for example captures an image of the electronic signature S included in the electronic document D that is displayed on a display unit (not shown) at another terminal.

The identifier acquiring unit 102 is implemented for example as the CPU operates. The identifier acquiring unit 102 acquires a first management file identifier (an identifier for identifying a first management file) that includes at least unique character information included in the electronic signature S (QR code) by capturing an image of the electronic signature S.

The held information acquiring unit 103 is implemented for example as the CPU operates. The held information acquiring unit 103 acquires various management files (such as a first management file, a second management file, and a third management file) from the external network N.

The hash value calculation unit 104 is implemented for example as the CPU operates. The hash value calculation unit 104 calculates the hash value of the electronic document D including the electronic signature S.

The integrity verification unit 105 is implemented for example as the CPU operates. The integrity verification unit 105 verifies the integrity between the acquired hash value and the calculated hash value. If the acquired hash value and the calculated hash value are consistent, the authenticity of the electronic document D can be assured to a certain degree.

The output unit 106 is implemented for example as the CPU operates. The output unit 106 outputs various kinds of information about the electronic document D. For example, the output unit 106 outputs information about various management files acquired from the external network N. For example, the output unit 106 outputs the result of integrity verification by the integrity verification unit 105.

The operation accepting unit 107 accepts various kind of user operation. For example, the operation accepting unit 107 accepts selection of performing the authenticity verification processing to the electronic document D. The operation accepting unit 107 also accepts for example transitions between various screens that display information about the electronic document D, and selection of links.

### <<Management File>>

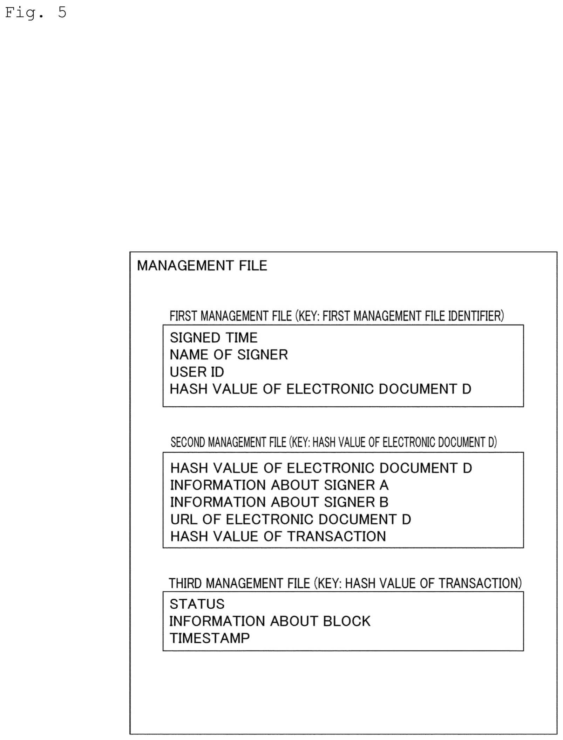

Fig. 5 is a schematic view of an exemplary data structure of a management file according to the embodiment. The management file may be held in the external network N, and more specifically, may be stored in a blockchain stored by the external network N. As shown in Fig. 5, the management file may include the first management file, the second management file, and the third management file. The first, second, and third management files may have a prescribed hierarchical structure.

The first management file is identified by the first management file identifier and is acquired for example through a search using the first management file identifier as a key. The first management file identifier may be an address (URL) indicating the location of the first management file. The first management file identifier may include unique character information embedded for example in the electronic signature S and may be acquired by decoding the electronic signature S (QR code) for example through imaging. The first management file includes for example the signed time, the signer's name, the user ID, and the hash value of the electronic document D. The first management file may include other kinds of user information.

The second management file is identified by the hash value of the electronic document D, and is acquired for example through a search using the hash value of the electronic document D as a key. The second management file includes for example the hash value of the electronic document D, the signer's information, a URL, and a transaction hash value. The signer's information may be any information about all signers that have performed electronic signature S. Fig. 5 shows, as an example, information about each of signers A and B who performed the electronic signature S on the electronic document D. The URL may be for example a URL indicating a storage area where the electronic document D is stored in the electronic document database 2. The user can acquire the electronic document D from the electronic document database 2 on the basis of the URL. The hash value of the transaction is the hash value of the transaction including the management file in the blockchain.

The third management file is identified by the hash value of the transaction and is acquired for example through a search using the transaction hash value as a key. The third management file includes for example the status of the transaction in which the management file is included, information about the block which includes the transaction, and the timestamp of the transaction. Note that the third management file may include other kinds of information about the transaction.

### <Exemplary Operation>

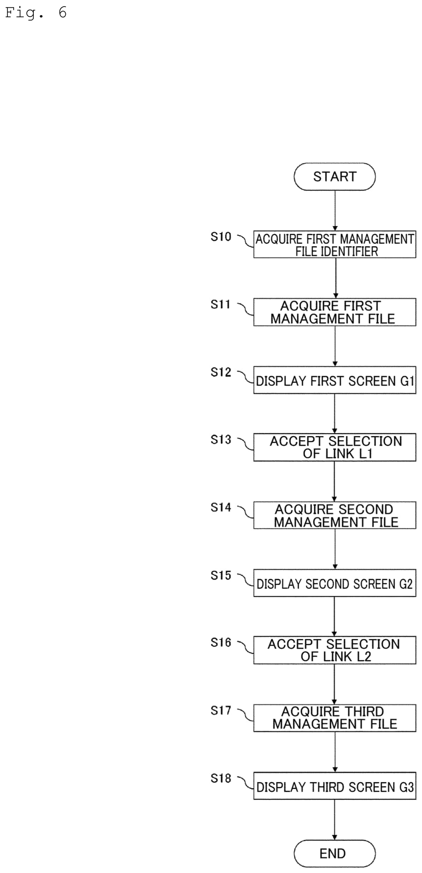

Fig. 6 is an operation flowchart for use in illustrating exemplary processing executed by the browsing device 100 according to the embodiment. The processing shown in Fig. 6 corresponds to the processing of acquiring and displaying information in various management files on the basis of the electronic signature S.

First In S10, when the imaging unit 101 captures an image of an electronic signature S (QR code) affixed to an electronic document D, the identifier acquiring unit 102 acquires a first management file identifier that includes at least unique character information included in the electronic signature S. The first management file identifier may include for example a URL and predetermined parameters that refer to a blockchain stored in an external network N as an address (URL) indicating the location of the first management file.

Then, in S11, the held information acquiring unit 103 acquires the first management file from the external network N on the basis of the acquired first management file identifier. The first management file is identified for example through a search using the first management file identifier as a key.

Then in S12, the output unit 106 displays a first screen G1 on the basis of the acquired first management file.

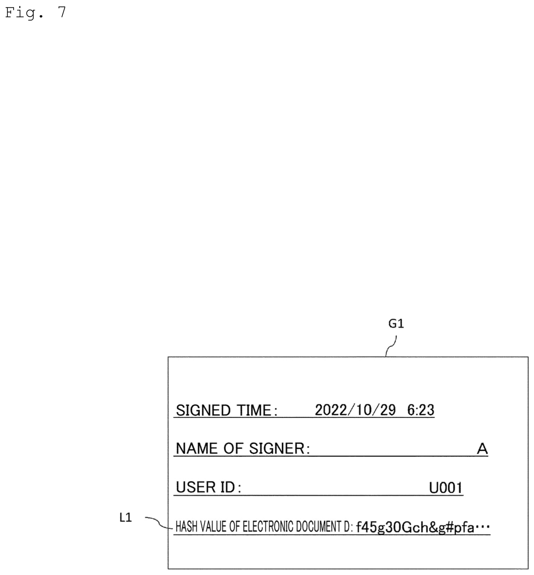

Fig. 7 is a schematic view of an example of the first screen G1 according to the embodiment. The first screen G1 may include various kinds of information included in the first management file. The first screen G1 includes for example signed time, the name of a signer, the user ID of the signer, and the hash value of the electronic document D. Although only information about one signer is shown in Fig. 7, the first screen G1 may include information about all signers that executed electronic signature to the electronic document D. In the first screen G1, the hash value of the electronic document D is shown as a link L1.

The browsing device 100 may execute the processing of checking the integrity of the electronic signature S for example in response to user operation on the first screen G1. Specifically, the hash value calculation unit 104 calculates the hash value of the electronic document D including the electronic signature S. Then, the integrity verification unit 105 compares the hash value of the electronic document D included in the acquired first management file with the hash value calculated by the hash value calculation unit 104. The integrity verification unit 105 determines whether the two hash values are identical. The output unit 106 then outputs the verification result. For example, if the two hash values are identical, the output unit 106 outputs a signal indicating the absence of alteration. Meanwhile, if the two hash values are different, the output unit 106 outputs a signal indicating the presence of alteration. In this way, since the hash value of the electronic document D is included in the first management file, the authenticity of the electronic document D can be verified for example by acquiring the first management file.

Then in S13, the user selects the link L1 displayed on the first screen G1. In this way, the operation accepting unit 107 accepts the selection of the link L1 by the user.

Then in S14, the held information acquiring unit 103 acquires a second management file from the external network N on the basis of the hash value of the electronic document D corresponding to the selected link L1. The second management file is identified for example through a search using the hash value of the electronic document D as a key.

Then in S15, the output unit 106 displays a second screen G2 on the basis of the acquired second management file.

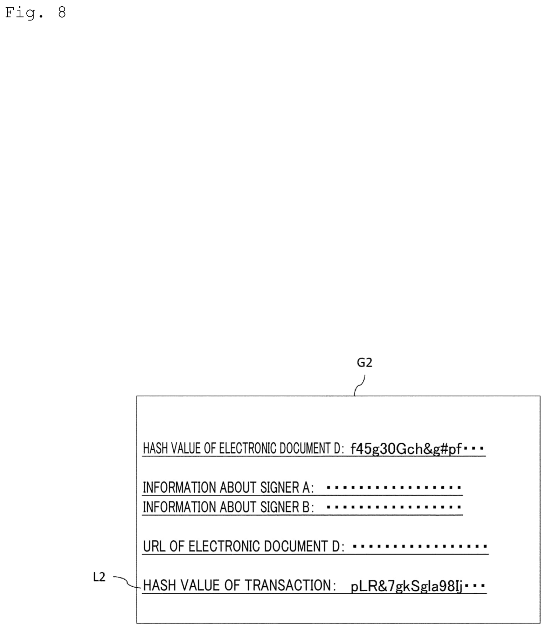

Fig. 8 is a schematic view of an example of the second screen G2. The second screen G2 may include various kinds of information included in the second management file. For example, the second screen G2 includes the hash value of the electronic document D, signer information, the URL of the electronic document D, and the hash value of the transaction. As the hash value of the electronic document D is selected, the processing of verifying the integrity of the electronic signature S as described above may be performed. The signer information may be arbitrary information about all signers that have made electronic signatures S on the electronic document D. In the second screen G2, the transaction hash value is displayed as a link L2.

As shown in Fig. 8, the second screen G2 displays a URL indicating the storage area of the electronic document database 2 where the electronic document D is stored. The browsing device 100 may acquire the electronic document D from the electronic document database 2 and display the content of the electronic document D in response to user operation to select the URL. As described above, the first screen G1 displays the hash value of the electronic document D, and the browsing device 100 can execute the processing of verifying the integrity of the electronic document D on the basis of the hash value. The second screen G2, which is displayed in response to selection of the link L1 included in the first screen G1, displays the URL of the electronic document D, and the content of the electronic document D is displayed on the basis of the URL.

Then in S16, the user selects for example the link L2 displayed on the second screen G2. In this way, the operation accepting unit 107 accepts the selection of the link L2 by the user.

Then in S17, the held information acquiring unit 103 acquires a third management file from the external network N on the basis of the hash value of the transaction corresponding to the selected link L2. The third management file is identified for example through a search using the hash value of the transaction as a key.

Then in S18, the output unit 106 displays a third screen G3 on the basis of the acquired third management file.

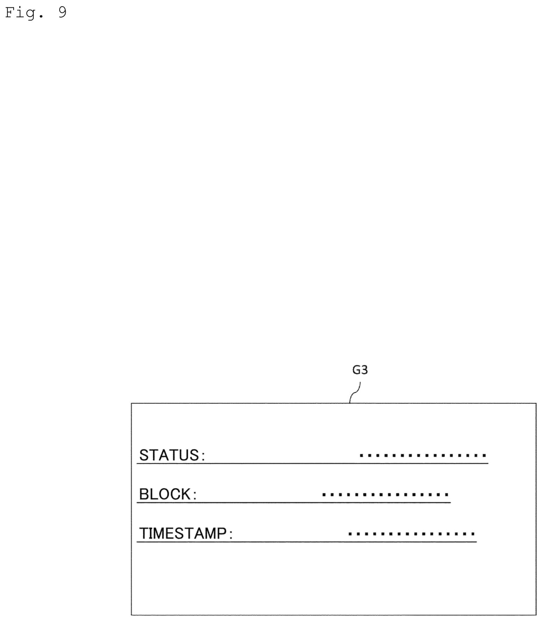

Fig. 9 is a schematic view of an example of the third screen G3 according to the embodiment. The third screen G3 may include various kinds of information included in the third management file. For example, the third screen G3 includes the status of the transaction in which the management file is included, information about the block in which the transaction is included, and the time stamp of the transaction. The third screen G3 may include other kinds of information about the transaction. This completes the processing. The first screen G1, the second screen G2, the third screen G3, and other screens can be arbitrarily switched between each other for example in response to user operation.

Each of the components included in the browsing device 100 can be implemented by hardware, software, or a combination thereof. Here, to be implemented by software means to be implemented as a computer reads and executes a program. The program can be stored using various types of non-transitory computer-readable media (non-transitory computer-readable media) and supplied to a computer. The non-transitory computer-readable media include various types of tangible storage media. Examples of the non-transitory computer-readable medium include a magnetic storage medium (such as a flexible disk, a magnetic tape, and a hard disk drive), a magneto-optical storage medium (such as a magneto-optical disk), a CD-ROM (Read Only Memory), a CD-R, a CD-R/W, and a semiconductor memory (such as a mask ROM, a PROM (Programmable ROM), an EPROM (Erasable PROM), a flash ROM, and a RAM (Random Access Memory)). The display program may also be supplied to the computer by various types of transitory computer-readable media. Examples of the transitory computer-readable media include an electrical signal, an optical signal, and an electromagnetic wave. The transitory computer-readable media can supply the program to the computer through a wired communication path such as an electric wire and an optical fiber or a wireless communication path.

Although the signature generator 1, the browsing device 100, and the program according to the preferred embodiments have been described as in the foregoing, the present disclosure is not limited by the embodiments described above and can be modified as appropriate.

For example, according to the embodiment, the signature generator 1 may further include a verification level acquiring unit (not shown) that acquires the level of the user's identification status as a verification level. For example, the signature generator 1 acquires any of several verification levels for each user, ranging from a high verification level when the name of a person in charge of the user that is a legal entity, the address, the shareholder composition, and the face photograph have been verified to a low verification level when only a certified copy of register has been verified. The signature generation unit 14 may change the color of the code according to the acquired verification level. For example, the signature generation unit 14 may generate a red code for the highest verification level. The signature generation unit 14 may generate a blue code for the lowest verification level. By using different colors for the codes in this manner, the verification level of each user can be verified from the code. Thus, when for example a higher identification level is required, the identification verification level can be easily checked.

According to the embodiment described above, the signature generation unit 14 generates, but not limited to, unique character information. The signature generation unit 14 does not have to generate unique character information if the contract is not allowed to be revised.

According to the embodiment described above, the electronic document output unit 18 may output the electronic document D with the electronic signature S on paper. The holding unit 17 may hold the content of the contract included in the electronic document D in a management file. In this way, the held information acquiring unit 103 can acquire the contract content from the management file at the time of authentication. The acquired contract content can be compared with the content of the electronic document D to determine whether the document has been altered.

According to the embodiment described above, instructions for the electronic signature S may be issued at different timing among users. In other words, the signature generation unit 14 may generate the electronic signature S and the time stamp at the time when the instructions are acquired from all the users.

According to the embodiment described above, when the original is revised on the basis of a revised version of the electronic document D, the past electronic signature S may be maintained in the electronic document D as it is. The holding unit 17 may also hold the past electronic signature S in the management file. This allows the revision history to be easily checked.

Also, according to the first embodiment, the affixing unit 15 may for example write the signature information about each user and the signed time by the user into the electronic document D in response to a signature instruction from the user for a plurality of users. The holding unit 17 may hold the user IDs, user names, signature information, signed time, and hash values about all the users in a management file after writing the signature information and the signed time in response to the signature instructions from all users.

According to the above embodiment, the affixing unit 15 may also stamp the electronic document D with a time stamp in order to finalize the contract conclusion to produce a final file.

Also according to the third embodiment, the hash value calculation unit 104 may acquire a hash value calculated at a terminal different from the browsing device 100. The hash value calculation unit 104 may acquire for example the hash value of the electronic document D calculated by another terminal that displays the electronic document D. The browsing device 100 may also acquire the electronic document D to be authenticated. In this case, the identifier acquiring unit 102 may acquire the identifier of the electronic signature S from the electronic document D instead of the imaging unit 101.

Also, according to the above embodiment, the signature generation unit 14 may superimpose a user name on the encoded electronic signature S as shown in Fig. 2.

### Reference Signs List

- 1: Signature generator
- 11: Document acquiring unit
- 12: Instruction acquiring unit
- 13: User information acquiring unit
- 14: Signature generation unit
- 15: Affixing unit
- 16: Calculation unit
- 17: Holding unit
- 100: Browsing device
- 103: Held Information acquiring unit
- 104: Hash value calculation unit
- 105: Integrity verification unit
- 106: Output unit
- 107: Operation accepting unit
- 2: Electronic document database
- D: Electronic document
- N: External network
- S: Electronic Signature

## Claims

1. A method which is implemented by a computer and which comprises the steps of:
acquiring, on the basis of an electronic signature of a user affixed to an electronic document, a first management file identifier for identifying a first management file including a hash value of the electronic document;
acquiring the first management file on the basis of the acquired first management file identifier;
acquiring, on the basis of the hash value included in the first management file, a second management file including the hash value and a URL for specifying a storage area in which the electronic document is stored; and
outputting the URL.

2. The method which is implemented by the computer according to claim 1, the method further comprising the steps of:
accepting selection of the URL;
acquiring the electronic document from the storage area; and
outputting the electronic document.

3. The method according to claim 1, wherein the first management file identifier includes at least unique character information included in the electronic signature.

4. The method according to claim 1, wherein the first management file and second management file are recorded in a blockchain.

5. The method according to claim 4, wherein
the second management file further includes a hash value of a transaction that constitutes the blockchain and includes the first management file and the second management file, and
the method being implemented by the computer and further comprising a step of acquiring a third management file including information about the transaction on the basis of the hash value of the transaction.

6. The method which is implemented by the computer according to claim 1, the method further comprising the steps of:
calculating the hash value of the electronic document including the electronic signature;
verifying integrity between the acquired hash value and the calculated hash value; and
outputting a verification result.

7. A program for causing a computer to execute the steps of:
acquiring, on the basis of an electronic signature of a user affixed to an electronic document, a first management file identifier for identifying a first management file including a hash value of the electronic document;
acquiring the first management file on the basis of the acquired first management file identifier;
acquiring, on the basis of the hash value included in the first management file, a second management file including the hash value and a URL for specifying a storage area in which the electronic document is stored; and
outputting the URL.

8. An information processing apparatus comprising:
a first management file identifier acquiring unit that acquires, on the basis of an electronic signature of a user affixed to an electronic document, a first management file identifier for identifying a first management file including a hash value of the electronic document;
a first management file acquiring unit that acquires the first management file on the basis of the acquired first management file identifier;
a second management file acquiring unit that acquires, on the basis of the hash value included in the first management file, a second management file including the hash value and a URL for specifying a storage area in which the electronic document is stored; and
a URL output unit that outputs the URL.
